# EUROPEAN PATENT APPLICATION

(11) **EP 3 051 161 A1**
(43) Date of publication of application: **03.08.2016**
(21) Application number: 15153423.7
(22) Date of filing: 02.02.2015
(51) Int. Cl.: F16D 7/02, F16D 27/00, F16C 11/10, F16M 11/06

(54) **Clutch apparatus**

(71) Applicant: Stephenson Gobin Limited, Durham DL14 6XB (GB)
(72) Inventor: Atkinson, Clive, Bishop Auckland, County Durham, DL14 8JJ (GB); Short, Paul Andrew, Bishop Auckland, County Durham, DL14 6TY (GB)
(74) Representative: Vinsome, Rex Martin

(57) **Abstract**

A clutch apparatus (8) comprises a torque limiter body (12) and a solenoid brake magnet (14). The torque limiter body is pivotable relative to the solenoid brake magnet when torque acting between the torque limiter body and the solenoid brake magnet is greater than a threshold value, and is not pivotable relative to the solenoid brake magnet when the torque is less than the threshold value. Energisation of coil assembly (20) enables the torque limiter body to pivot relative to the solenoid brake magnet.

## Description

The present invention relates to a clutch apparatus, and relates particularly, but not exclusively, to a clutch apparatus for use as a locking device for an arm holding a machine keyboard close to a machine operator.

It is known to provide a clutch apparatus acting between an arm and a support for supporting a keyboard for a machine operator, wherein the arm is pivotable relative to the support and maintains its position if a torque applied to the clutch apparatus is less than a predetermined threshold value, whereas the support can be pivoted relative to the arm if the torque applied exceeds the threshold value. In this way, if the keyboard is pushed hard, the arm can pivot to avoid damage.

Known clutch apparatus suffer from the drawback that it is difficult to adjust the position of a keyboard relative to a machine when the clutch apparatus has a sufficiently high threshold torque value.

Preferred embodiments of the present invention seek to overcome the above disadvantage of the prior art.

According to an aspect of the present invention, there is provided a clutch apparatus comprising:-
at least one first member;
at least one second member;
clutch means acting between at least one said first member and at least one said second member, wherein said first member is pivotable relative to said second member when torque acting between said first and second members is greater than at least one threshold value, and said first member is not pivotable relative to said second member when said torque is less than said threshold value; and
clutch overriding means actuable to enable at least one said first member to pivot relative to at least one said second member.

By providing clutch overriding means actuable to enable at least one said first member to pivot relative to at least one said second member, this provides the advantage that the threshold torque value can be set higher than for known clutch apparatus, thereby ensuring a more secure connection between the first and second members between which the clutch apparatus acts, while enabling apparatus incorporating the clutch apparatus to be easily adjusted by use of the clutch overriding means.

The clutch means may be adapted to transmit torque from at least one said first member to at least one said second member by means of friction.

This provides the advantage of enabling the apparatus to provide a large threshold torque value while enabling compact construction of the apparatus.

The clutch means may further comprise at least one friction member for transmitting torque from at least one said first member to at least one said second member.

At least one said friction member may contain at least one fluoropolymer.

This provides the advantage of providing a smooth slipping torque when the threshold value is exceeded, thereby reducing wear of the apparatus.

At least one said fluoropolymer may include polytetrafluoroethylene (PTFE).

At least one said friction member may contain carbon.

This provides the advantage of improving the wear resistance of the friction member.

The apparatus may further comprise first biasing means for urging at least one said friction member into engagement with a pressure member.

At least one said threshold value may be adjustable.

At least one said threshold value may be adjustable by means of adjusting a biasing force of said first biasing means.

This provides the advantage of enabling the apparatus to be made more compact.

The clutch overriding means may comprise at least one third member moveable between a first position in which at least one said first member is pivotable relative to at least one said second member when torque acting between said first and second members is less than said threshold value, and a second position in which said first member is not pivotable relative to said second member when said torque is less than said threshold value.

The clutch overriding means may further comprise actuator means for moving at least one said third member to a first position thereof.

The actuator means may comprise at least one electromagnet.

The clutch overriding means may further comprise second biasing means for urging at least one said third member towards a second position thereof.

According to another aspect of the present invention, there is provided a support apparatus comprising a support body, a connecting member, and at least one clutch apparatus as defined above acting between said support body and said connecting member for controlling pivotal movement of said support body relative to said connecting member.

A preferred embodiment of the invention will now be described, by way of example only and not in any limitative sense, with reference to the accompanying drawings in which:-
Figure 1 is a perspective view of a keyboard support apparatus embodying the present invention;
Figure 2 is an end view of the apparatus of Figure 1;
Figure 3 is a sectional view along the line A-A in Figure 2;
Figure 4 is a side view of a clutch apparatus and fixing components of the support apparatus of Figure 1;
Figure 5 is an end view of the clutch apparatus of Figure 4; and
Figure 6 is a sectional view along the line B-B in Figure 5.

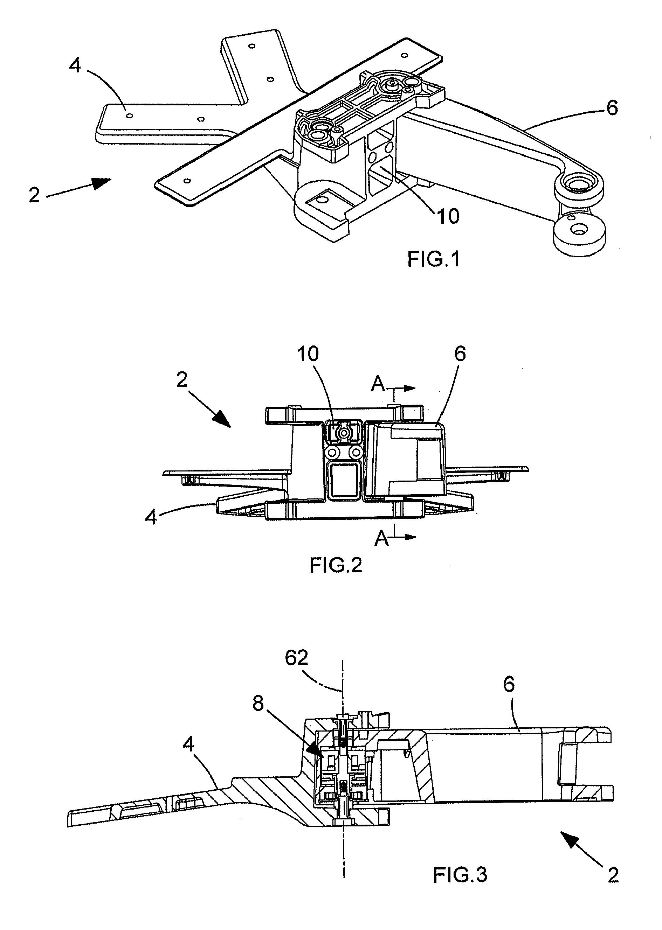

Referring to Figures 1 to 3, a support apparatus 2 embodying the present invention for supporting a keyboard (not shown) close to a machine operator has a support body 4 defining a keyboard support part pivotably mounted to a first end of a connector member in the form of a connector arm 6. A second end of the connector arm 6 is pivotably mounted to a machine (not shown) such as a piece of medical apparatus. A clutch apparatus 8 embodying the present invention is located in a recess 10 between the support body 4 and the first end of the connector arm 6.

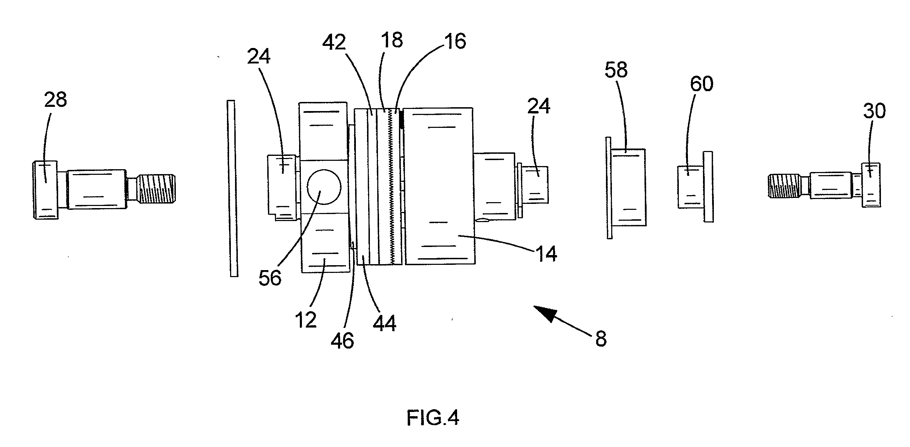

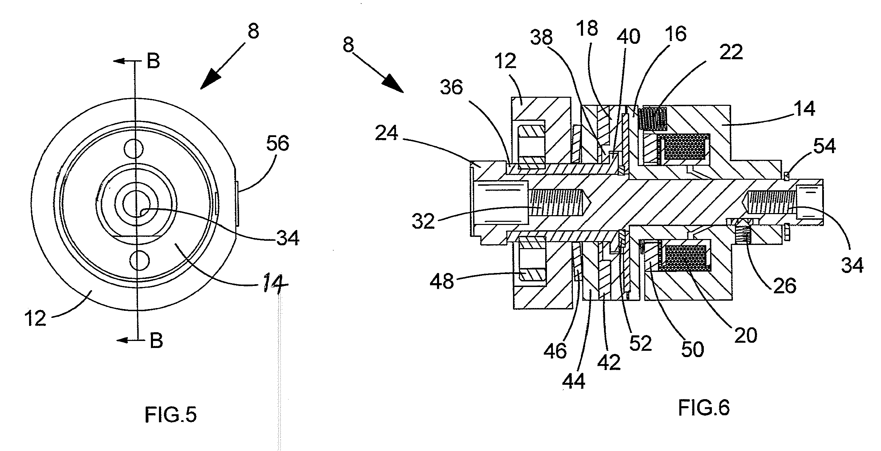

Referring to Figures 4 to 6, the clutch apparatus 8 has a first member in the form of a torque limiter body 12 non-rotatably mounted to the support body 4 and a second member in the form of a solenoid brake magnet 14 non-rotatably mounted to the connector arm 6. A third member in the form of a spring loaded toothed plate 16 is axially slidably mounted to the solenoid brake magnet 14 and is moveable between a first, rightmost position as shown in Figure 6, in which teeth on the toothed plate 16 are disengaged from teeth on a toothed engaging plate 18 to allow rotation of the toothed plate 16 and engaging plate 18 relative to each other, and a second, leftmost position as shown in Figure 4, in which the teeth on the toothed plate 16 engage teeth on the engaging plate 18 to prevent rotation of the toothed plate 16 and engaging plate 18 relative to each other. The toothed plate 16 is moveable from the second position to the first position by means of an electromagnet having a coil assembly 20, against the action of second biasing means in the form of one or more compression springs 22.

The solenoid brake magnet 14 and toothed plate 16 are non-rotatably mounted to a mounting shaft 24 by means of set screw 26 and the mounting shaft 24 is non-rotatably mounted to the connector arm 6 by means of first shoulder screw 28 and second shoulder screw 30, which are received in respective threaded recesses 32, 34 in the ends of the mounting shaft 24.

A torque limiter bush 36 is rotatably mounted to the mounting shaft 24, and the toothed engaging plate 18 is rotatably mounted to the torque limiter bush 36 such that a radially inner flange 38 on the toothed engaging plate 18 abuts a flange 40 at the right hand end of the torque limiter bush 36 as shown in Figure 6. A thrust washer 42 of fluoropolymer such as polytetrafluoroethylene (PTFE), or other suitable material which will be familiar to persons skilled in the art, which also contains carbon for improving the wear resistance of the thrust washer 42, is located between the toothed engaging plate 18 and a pressure plate 44 which is non-rotatably mounted to the torque limiter bush 36, and the torque limiter body 12 applies pressure via a disc spring 46 to compress the thrust washer 42 between the pressure plate 44 and the engaging plate 18 by means of a torque limiter lock nut 48. By adjustment of the axial position of the torque limiter lock nut 48 by mutual engagement of screw threads on the lock nut 48 and torque limiter bush 36, the spring force of the disc spring 46 can be adjusted, which in turn adjusts the frictional force between the thrust washer 42 and the engaging plate 18 and pressure plate 44. The carbon content of the thrust washer 42 is typically of the order of 25%. By using a fluoropolymer such as PTFE, for which the difference between the dynamic and static coefficients of friction is small, for the thrust washer 42, there is a fairly smooth transition from holding to slipping of the thrust washer 42, with little juddering or noise.

The solenoid brake magnet 14 is non-rotatably mounted to the mounting shaft 24 by means of set screw 26, and the spring loaded toothed plate 16 is axially slidable out of engagement with the toothed engaging plate 18 against the action of compression spring 22 by means of energisation of coil assembly 20 located in a recess in the solenoid brake magnet 14 behind a body plate 50. The torque limiter bush 36 is located in position on the mounting shaft 24 by means of a circlip 52, and the solenoid brake magnet 14 is located in position on the mounting shaft 24 by means of a circlip 54. An anti-rotation pin 56 prevents rotation of the torque limiter body 12 relative to the support body 4. A pair of bushes 58, 60 provide extra support to the assembly.

The operation of the support apparatus 2 will now be described.

When the coil assembly 20 is not energized, the application of torque to the support body 4 so as to tend to cause the support body 4 to pivot relative to the connector arm 6 about pivot axis 62 applies a torque between the torque limiter body 12 and the mounting shaft 24. This torque is applied via the disc spring 46, pressure plate 44, thrust washer 42 and toothed engaging plate 18 to the spring loaded toothed plate 16 which, when the coil assembly 20 is not energized, is in its second position as shown in Figure 4. The teeth of the toothed plate 16 therefore engage the teeth of the engaging plate 18, as a result of which the torque applied to the torque limiter body 12 is in turn applied to the toothed plate 16 and solenoid brake magnet 14. Because the toothed plate 16 and solenoid brake magnet 14 are non-rotatably mounted to the mounting shaft 24, this torque is also applied to the mounting shaft 24, which is fixed in position relative to the connector arm 6.

When the torque applied by the torque limiter body 12 exceeds the threshold torque, however, the maximum frictional force of the thrust washer 42 is overcome, as a result of which the toothed engaging plate 18 can rotate relative to the pressure plate 44 to enable rotation of the torque limiter body 12 relative to the mounting shaft 24, which in turn enables rotation of the support body 4 relative to the connector arm 6.

In order to adjust the position of the support body 4 relative to the connector arm 6, the coil assembly 20 is energized by actuation of a suitable switch (not shown) to supply electrical power to the coil assembly 20. Energisation of the coil assembly 20 retracts the spring loaded toothed plate 16 against the action of the compression spring or springs 22 out of engagement with the toothed engaging plate 18, to allow rotation of the torque limiter body 12 relative to the solenoid brake magnet 14 and mounting shaft 24 on application of a torque less than the threshold torque corresponding to the maximum frictional force of the thrust washer 42.

It will be appreciated by persons skilled in the art that the above embodiment has been described by way of example only and not in any limitative sense, and that various alterations and modifications are possible without departure from the scope of the invention as defined by the appended claims.

## Claims

1. A clutch apparatus comprising:-
at least one first member;
at least one second member;
clutch means acting between at least one said first member and at least one said second member, wherein said first member is pivotable relative to said second member when torque acting between said first and second members is greater than at least one threshold value, and said first member is not pivotable relative to said second member when said torque is less than said threshold value; and
clutch overriding means actuable to enable at least one said first member to pivot relative to at least one said second member.

2. An apparatus according to claim 1, wherein the clutch means is adapted to transmit torque from at least one said first member to at least one said second member by means of friction.

3. An apparatus according to claim 2, wherein the clutch means further comprises at least one friction member for transmitting torque from at least one said first member to at least one said second member.

4. An apparatus according to claim 3, wherein at least one said friction member contains at least one fluoropolymer.

5. An apparatus according to claim 4, wherein at least one said fluoropolymer includes polytetrafluoroethylene (PTFE).

6. An apparatus according to any one of claims 3 to 5, wherein at least one said friction member contains carbon.

7. An apparatus according to any one of claims 3 to 6, further comprising first
biasing means for urging at least one said friction member into engagement with a pressure member.

8. An apparatus according to any one of the preceding claims, wherein at least one said threshold value is adjustable.

9. An apparatus according to claims 7 and 8, wherein at least one said threshold value is adjustable by means of adjusting a biasing force of said first biasing means.

10. An apparatus according to any one of the preceding claims, wherein the clutch overriding means comprises at least one third member moveable between a first position in which at least one said first member is pivotable relative to at least one said second member when torque acting between said first and second members is less than said threshold value, and a second position in which said first member is not pivotable relative to said second member when said torque is less than said threshold value.

11. An apparatus according to claim 10, wherein the clutch overriding means further comprises actuator means for moving at least one said third member to a first position thereof.

12. An apparatus according to claim 11, wherein the actuator means comprises at least one electromagnet.

13. An apparatus according to any one of claims 10 to 12, wherein the clutch overriding means further comprises second biasing means for urging at least one said third member towards a second position thereof.

14. A support apparatus comprising a support body, a connecting member, and at least one clutch apparatus according to any one of the preceding claims acting between said support body and said connecting member for controlling pivotal movement of said support body relative to said connecting member.
